# EUROPEAN PATENT SPECIFICATION

(11) **EP 1 170 962 B1**
(45) Date of publication and mention of the grant of the patent: **11.07.2007**
(21) Application number: 00440206.1
(22) Date of filing: 05.07.2000
(51) Int. Cl.: H04Q 3/00

(54) **A method of service provision in a communications network and program modules and means therefor**
Verfahren zur Dienstbereitsstellung in einem Kommunikationsnetzwerk und Programmodulen und diesbezügliche Mittel
Méthode pour la prestation de services dans un réseau de communications et modules de programmes et moyens s'y rapportant

(43) Date of publication of application: 09.01.2002
(73) Proprietor: Alcatel Lucent, 75008 Paris (FR)
(72) Inventor: Gys, Ludo, B-2200 Herentals (BE)
(74) Representative: Schmidt, Werner Karl

(56) References cited:
- EP-A- 0 926 920
- WO-A-99/62239
- US-A- 6 061 729

## Description

### Background of the Intention

The present invention relates to a method for providing personal services for a communication means of a user, said communication means being connected to a communication network. The invention furthermore relates to a service computer therefor, a service server therefor, a service container therefor, a service computer module for a service computer and a service server module for a service server.

Known communication networks, e.g., so-called Intelligent Networks (IN), provide for communication means of users, e.g., for telephone terminals or personal computers of subscribers, predefined sets of communication services. To this end, in an Intelligent Network, for example, a global service control node, a so-called SCP (service control point) is linked to several so-called SSP's (service switching points) through the central signaling network No. 7. The service control point centrally controls the provision of one or more communication services for the service switching points connected to the service control point.

Such an intelligent network is disclosed in United States Patent No. 6 061 729**,** which describes a telecommunications network including a client system and a server system. The client system has a service message and a client interface. The service message is of a standard format and operable to define at least one of a platform manager operation requesting information pertaining to the server system, o database operation requesting modification of information pertaining to a service in the server system and a service manager operation requesting administration of the service in the server system. The client interface is operable to transmit the service message to the server system over a network. The server system includes a platform manager, a database subsystem, service manager and a server interface. The platform manager is operable to store and provide information pertaining to the server system. The database subsystem is operable to store, provision and provide information pertaining to the service. The service manager is operable to administer the service in the server system. The server interface is operable to receive the service message transmitted over the network by the client interface and to pass an included platform manager operation to the platform manager for execution, an included database operation to the database system for execution and an included service manager operation to the service manager for execution.

The service switching points a specially equipped communication network nodes. If one of these switches receives a special connection request from a subscriber terminal of the communication network, this information is addressed to a service switching function integrated in the service switching point, which in turn sends a service request message to the global service control point. Within the service control point, this request message triggers a service logic allocated to it, which then controls the provision of the communication service, in that it instructs the service control point, for example, to connect the special connection request to another destination telephone number or directs it to a service support system, e.g., to a so-called Intelligent Peripheral (IP), which issues voice messages or performs voice recognition.

If a subscriber of a "home" communication network temporarily moves from its home network to a visited communication network, the subscriber expects from the visited communication network, that it provides a so-called Virtual Home Environment (VHE) which is a predefined set of communication services usually provided by home communication network according to a subscriber's personal profile. Even if the home communication network transmits the subscriber's personal profile to the visited communication network, the latter is usually not in a position to perform all types of communication services as defined by the subscriber's personal profile. For example, the visited network's intelligent peripheral (IP) is not able to perform voice recognition or, a service logic for providing a special communication service is not available in a service control point of the visited communication network. Even though the service logic was available, e.g. transferred from the home communication network to the visited communication network, a service execution platform able to execute the service logic may be missing in the service control point.

In another scenario, the subscriber's terminal is connected to a data communication network, for example to the Internet. In this case a predefined Internet server or a server cluster of the subscriber's home operator perform the personal communication services for the subscriber. Such services may be more data-oriented or more voice-oriented. Using for example VoIP (voice over Internet protocol) the user terminal is connected via the Internet with a service control point of the user's "home" communication network. Dependent on the current location of the terminal an accidentally long distance between the server and the terminal may cause considerable network load. Additionally, in this case the response time while using a service at the terminal is annoying.

In both examples mentioned the provision of the personal services for a communication means of a user is largely dependent on the architecture and the abilities of the respective communication network the user is presently using.

### Summary of the Invention:

Accordingly one object of the invention is to provide personal services for a communication means of a user largely independent of a communication network to which said communication means is connected.

This object is to be attained by methods in accordance with the technical principle of claim 1, a service computer in accordance with the technical principle of claim 7, a service computer module in accordance with the technical principle of claim 8, a service server in accordance with the technical principle of claim 9, a service server module in accordance with the to the technical principle of claim 10 and furthermore a service container in accordance with the technical principle of claim 11. Advantageous further effects of the invention will be seen from the dependent claims and the specification.

In this respect one principle of the invention is that a service computer performs the function of a network-independent service execution platform executing a service container that provides a personal service for user's communication means, e.g., a terminal, via a communication network to which the terminal is currently connected. To this end the service computer offers to the service container at least one network lock which is a predefined interface to the communication network. A service server operated by the user's home operator transmits the service container to the service computer, for example, upon a service request for the personal service transmitted by the user terminal. The service container contains a service machine managing the execution of the personal service for the user terminal. To this end, the service machine executes at least one service component, which is transmitted together with the service machine in the same service container. The service component might also be transmitted via another service container to the service computer. For the provision of the personal service, the service container uses the network lock which is for example an interface to a call connection to the user terminal.

The service computer is a network-independent and operator-independent execution platform for service containers and controls the access of the respective service container to the communication network via the network lock(s). Thus, dependent on the service computer's decentralized location the service container may be executed close to the current location of the terminal for which the service container provides the personal service. The operator of the communication network to which the user terminal is currently connected needs neither to run complex service execution platforms like the above mentioned service control points, which are especially adapted to the execution of predefined service logics, nor to provide dedicated service resource points mentioned like the intelligent peripheral (IP), which issues voice messages or performs voice recognition. The controlled access to the communication network is managed by the service computer, whereas the service server provides service containers that fit to the fit to the locks offered by the service computer. In essence, the operator needs merely to run a service computer having a simple structure, e.g., like the Network Computer in the JAVA architecture. The service computer executes a service container and offers to it a controlled network lock to the communication network. Moreover, an independent third-party operator can run the service computer on behalf of the communication network's operator. The service containers themselves contain and execute the requested service instance which is, for example, a program module or an object performing individually configured or standardized services, e.g., intelligent network (IN) services according to so-called capability sets as defined by the international telecommunication union (ITU), the former CCITT (comité consultatif international télégraphique et téléphonique). Possible services performed by service containers are, for example, call forwarding (if the called party is) busy (CFB), calling card services, voice recognition or a mailbox service that stores messages on behalf of a user. Independent of the communication network currently serving the user's terminal, the user can make use of a real virtual home environment and the full range of personal services assigned to this home environment. Additionally, the interface between the service computer and the service server is quite simple, since merely service container encapsulating service instances are transmitted. Furthermore, the introduction of a new or modified service is faciliated, because only a service container containing the instance of the new service is required, but not an adaptation of the service computer to the new service container.

Advantageously, the service computer provides for the service container a monitor lock, via which the service container informs the service server of the condition of the service computer. The monitor lock could also be denominated as "call and session detailed record"-Lock (CDR-Lock), since data sent the via the monitor lock contains for instance information about the usage of the service computer and/or the usage of the network lock(s). Dependent on that information the service server charges the user and/or controls the provision of the personal service, e.g., transmits further service containers containing further personal service components to a second service computer, if the first service computer serving the terminal is, e.g., close to be overloaded. The monitor lock may be integrated into the network lock mentioned above.

For the management of the service provision by the operator of the communication network serving the user terminal and/or by the operator of the service server, it is an advantage if the service computer provides a management lock for the service container. The service container sends alarms to an operator terminal or a network management system via the management lock, the alarms for instance notifying of a malfunction of the service computer.

The following description will serve to explain the advantages of the invention on the basis of working examples as illustrated in the accompanying drawings.

### Brief Description of the Drawings:

- Figure 1: shows an arrangement for the performance of the method in accordance with the invention using terminals TERA and TERB, a service server SSV in accordance with the invention and a service computer SSC in accordance with the invention.
- Figure 2: is a is a flow chart illustrating an exemplary process of providing services in accordance with the invention.

### Detailed Description of the Invention:

Reference will now be made in detail to the present preferred embodiments of the invention as illustrated in the accompanying drawings. In describing the preferred embodiments and applications of the present invention, specific terminology is employed for the sake of clarity. However, the invention is not intended to be limited to the specific terminology so selected, and it is understood that each specific element includes all technical equivalents which operate in a similar manner to accomplish a similar purpose.

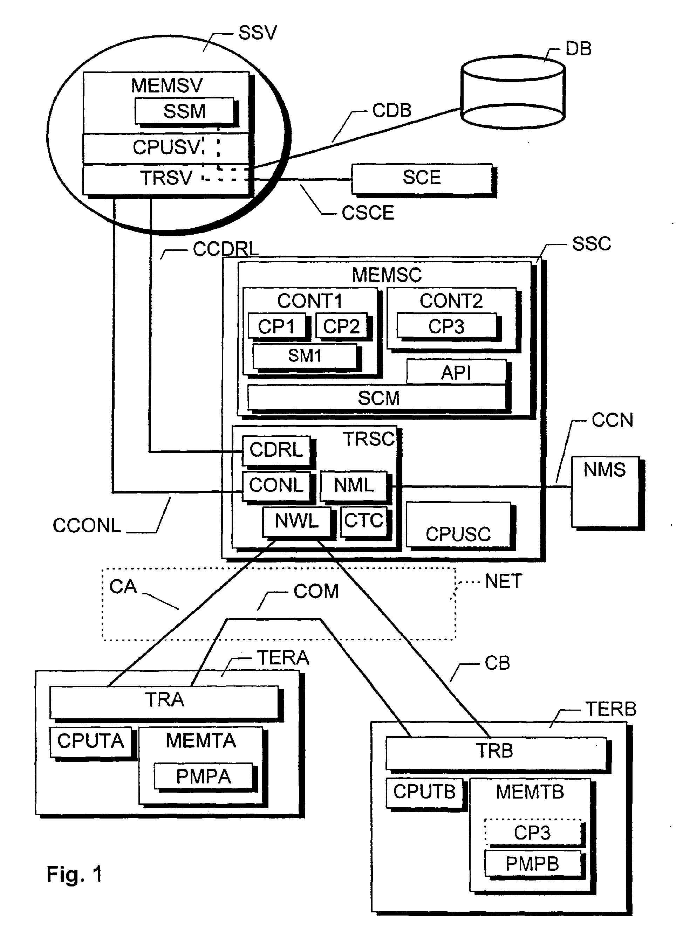

Figure 1 shows a very diagrammatically presented arrangement by way of example, with which the invention may be put into practice. Figure 1 shows terminals TERA and TERB serving as communication means of users A and B (not shown) respectively. The terminal TERA is, for example, an analog or an integrated services digital network (ISDN) telephone set, a personal computer or a videophone. The terminal TERB is for example a mobile telephone terminal able to interpret the so-called Wireless Application Protocol (WAP) or a so-called network computer (NC) according to the Java architecture (as defined by Sun Microsystems, Inc., of Mountain View, California). The terminals TERA and TERB may be connected to local computer networks or private telephone networks (both not shown) at the users A and B site respectively.

For simplification the terminals TERA and TERB are of similar design and only diagrammatically depicted as block diagrams of functions. The terminals TERA and TERB possess connecting means TRA and TRB for the transmission and reception of data via a communication network NET, which for example will be a mobile radio network or a circuit switched communication network, the Internet or any desired combination of such networks. The network NET may be a real or virtual private/corporate network or a public network. The connecting means TRA and, respectively, TRB for example comprise digital subscriber line (DSL) modems, ISDN (integrated services digital network) adapters or wireless interface modules. Furthermore the terminals TERA and TERB possess control means CPUTA and, respectively, CPUTB and also memory means MEMTA and, respectively, MEMTB, which are respectively connected with each other and with the connecting means TRA and, respectively, TRB by connections, which are not illustrated. The control means CPUTA and CPUTB, respectively, are for example processors with which a program code may be executed, which is stored in memory means MEMTA and, respectively, MEMTB. The memory means MEMTA and MEMTB are for instance in the form of hard disks or RAM modules. Furthermore the terminals TERA and TERB have display means as for example LCDs (liquid crystal displays) and input means, for example keyboards, the display means and input means being not shown. Further components which are not illustrated are speakers and microphones for voice input and output. The terminals TERA and TERB are run by an operating system.

A service computer SSC is associated with the communication network NET. The service computer SSC may be operated by the operator of the network NET that may be, as mentioned, a corporate network. Some important components of the service computer SSC are depicted by way of example, namely a control means CPUSC, memory means MEMSC and connecting means TRSC. Using the connecting means TRSC, e.g., comprising interface cards, it is possible for the service computer SSC to establish connections CA, CB, CCONL, CCDRL and CCN and further connections, which are not illustrated. In the case of the control means CPUSC it is a question of a processor or a group of processors, which are able to execute the program code of program modules, which are stored in the memory means MEMSC. The control means CPUSC controls the function of the server SC and while so doing for example influences the further function of the connecting means TRSC. The connecting means TRSC, the control means CPUSC and the memory means MEMSC are connected with one another by connections which are not illustrated in figure 1. The service computer SSC is operated by an operating system. In the present embodiment the service computer SSC is a so-called thin client, which is a system that runs a very light operating system with no local system administration and executes applications delivered over a network. The service computer SSC, however, may also be a more complex system containing a local system administration and providing some basic services.

In the present case the applications executed by the service computer SSC are service containers CONT1 and CONT2 delivered by a service server SSV via the connection CCONL. Additionally, the service computer SSC contains service computer module SCM, containing in the present embodiment a so-called virtual machine, which is a software "execution engine" that safely and compatibly after stringent security checks executes the byte codes of the service containers on the control means CPUSC. The service computer module SCM may comprise an interpreter decoding and executing statements of the service container's CONT1 program code. Additionally, the service computer module SCM may dynamically link native methods, manage memory or handle exceptions on behalf of the service container CONT1.

For the sake of simplification, from the service server SV are also only some important components shown, namely a control means CPUSV, memory means MEMSV and connecting means TRSV. Using the connecting means TRSV it is possible for the server SV to establish connections CCONL and CCDRL to the service computer SSC and connections CSCE and CDB to a service creation environment SCE and a database DB respectively. In a further form of the invention the service creation environment SCE and the database DB are integrated in the service server SSV. The connecting means TRSV can serve further connections, which are not illustrated. In the case of the control means CPUSV it is a question of a processor or a group of processors, which are able to execute the program code of program modules, which are stored in the memory means MEMSV. Out of these program modules a service server module SSM is shown, the service server module SSM performing essential functions according to the invention. The control means CPUSV controls the function of the server SV and while so doing for example influences the further function of the connecting means TRSV. The connecting means TRSV, the control means CPUSV and the memory means MEMSV are connected with one another by connections which are not illustrated in figure 1. The server SV is run by an operating system, as for instance Unix.

The service server SSV is operated by a home operator of users A and B to which the home operator offers respectively individual personal services like, for example, videophony, personal message boxes, broadcasting, multicasting, bill viewing, information pushing in response to a user profile or directory look-up. In a special scenario, both the service computer SSC and the service server SSV are operated by the same operator.

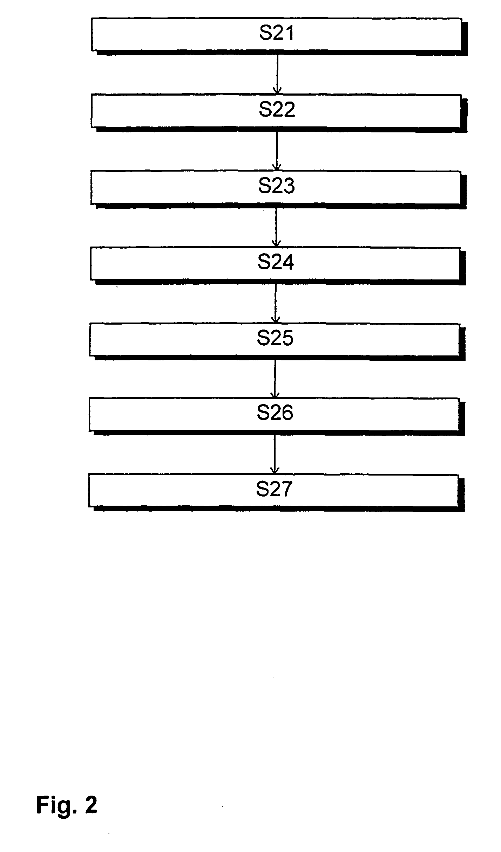

An exemplary process of providing a personal service for terminal TERA is shown comprising steps S21 to S27 in figure 2.The user A at step S21 logs on to terminal TERA and typically uses a windows application or the like or just picks up a handset of the terminal TERA. A mouse and/or a keyboard and/or a voice interface of terminal TERA initiate a program module PMPA for retrieving and using personal services, the program module PMPA being executed by the control means CPUTA.

The program module PMPA works, for example, as follows: an icon may appear on the display means of terminal TERA for service launch. By clicking or otherwise selecting the icon, by pressing a key of the keyboard or by giving a voice command, the user A initiates the transmission by the connecting means TRA via connection CA of a request message to the network NET via step S22. The request message comprises the user's A identity and address so that messages may be returned to the user A and service data such as a one indicating commands for controlling personal services. The request message may also comprise a personal authorization or access code of user A, the authorization code authorizing user A to access the requested service. In the present embodiment the network NET passes the request message to the service computer SSC. Via step S23 the service computer SSC forwards the request to the service server SSV via the connection CCONL. With the aid of a program module SSM executed by the control means CPUSV the service server SSV examines via step S24 the extent to which services requested by user A are obtainable from the service computer SSC. The services may be services to which the user A has subscribed on a pay basis or services that are free, for example, and available over the network NET by means of the service computer SSC. The service requested by user A is in the present case a message box service, controlled by voice commands to be given at the terminal TERA.

It may however happen that the service computer SSC is bypassed and the network NET immediately forwards the request message to the service server SSV via a connection not shown in figure 1 or, in another scenario, that a dedicated service container run by the service computer SSC performs step S24 checking the actual ability of the service computer SSC to provide the personal services requested by user A, the service provision, e.g., performed by service containers already stored in the service computer SSC.

In this respect the service server SSV determines that the service computer SSC is not able to perform such functions as requested by user A. Consequently the server SV downloads via step S25 the service container CONT1 to the service computer SSC via the connection CCONL that may be established, e.g., on the Internet or on a transport network like a synchronous optical network (SONET) or a SDH-network (SDH = Synchronous Digital Hierarchy).

The service computer SSC receives the service container CONT1 via receiving means CONL and installs the service container CONT1 in its memory means MEMSC. The service computer module SCM invokes subsequently a service machine SM1 contained in the service container CONT1 via step S26.

The receiving means CONL is a program module handling the connection CCONL with the service server SSV, i.e., managing the protocol used on connection CCONL and receiving data comprising service containers. In any case, the physical interface function required for the connection CCONL is handled by the connecting means TRSC. The receiving means CONL may also advantageously comprise a specialized object request broker (ORB) binding software to enable software modules running on the service computer SSC to make calls and requests to the service server SSV serving as a so-called object request broker. The respective architecture may be implemented according to the common object request broker architecture (CORBA) specification from the object management group (OMG). The logical function, e.g., protocol handling and/or ORB binding, of the receiving means CONL may be executed by the connecting means TRSC or may be integrated in the service computer module SCM. To this end, the connecting means TRSC, being for example an interface card, is equipped with a processor CTC executing program code of the receiving means CONL.

The service computer module SCM offers to the service machine SM1 a controlled and secure access to predefined resources of the service computer SSC, as for example, access to the memory means MEMSC and processor time of the control means CPUSC. Using the resources offered by the service computer module SCM the service machine SM1 manages the execution of the personal services for the terminal TERA. Thus, the service machine SM1 activates service components CP1 and CP2 also contained in the service container CONT1. The service components CP1 and CP2 are program modules or program functions performing the message box service. The service machine SM1 is, by way of example, a Java application that executes within the service computer module SCM and provides an application context for the service components CP1 and CP2 that are or that comprise, e.g., Java applets or beans. The service component CP1, however, may be also a function called by the service machine SM1. In any case, the service machine SM1 and the service components CP1 and CP2 constitute a service instance.

In a step S26 the service container CONT1 establishes a connection CA to the terminal TERA via network lock NWL provided by the service computer SSC for the service container CONT1. The network lock NWL offers the service container CONT1 a predefined interface to the network NET. This interface may be, for example, a simple call type interface. In this case, the network lock NWL establishes the a call connection using a subscriber number assigned to the connection CA, the subscriber number being provided by the service container CONT1. Dependent on the network's NET and on the respective terminal's capabilities the network lock NWL and the connecting means TRSC, however, may be variously configured to include, e.g., an integrated services digital network (ISDN) interface, an Ethernet interface, a digital subscriber line (DSL) modem or and a cordless phone interface (e.g., a 900 MHZ transceiver). The service computer SSC may provide several network locks in parallel being of identical design or variously configured. Via a step S27 the service container CONT1 invites the user A to record a spoken announcement as a "welcome message" for the message box service to be performed, whereby the service component CP1 performs the dialog function or input/output function with terminal TERA and the service component CP2 the record function.

At the terminal TERA site, the functions with respect to the personal service provision, i.e., with respect to the message box service, may be performed by usual means, such as speakers and microphones for voice input and output. It may however happen, that the program module PMPA and the service container CONT1 interact for service provision. For example, the service container CONT1 may send program code, e.g., objects, to the program module PMPA via the connection CA. Executing or applyinging this object the program module PMPA sends via a pull action further data requests to the service container CONT1 or pushes data to the service container CONT1, the data to be evaluated by the service container CONT1. The push and pull actions may be performed according to the Java definitions.

The network lock NWL may also offer a control or signaling interface, for instance an interface to a signaling network like the central signaling system no. 7. Thus, a service container run by the service computer SSC may provide services of an intelligent network, e.g., the so-called automatic call back of the person who last called (automatic call back (ACB)). To this end, the service container may communicate via the network lock NWL with intelligent network devices (not shown) located somewhere in the network NET, e.g., with intelligent peripherals (IP), service switching points (SSPs) or a service control point (SCP) and the like. Additionally, the network lock NWL may manage protocols used on the respective intelligent network connections, for example the intelligent network applications protocol (INAP), the transport capabilities application part (TCAP) or the signalling connection control part (SCCP).

The network lock NWL may also offer an interface to connections on which the transmission control protocol/internet protocol (TCP/IP) is used, for example connections via the Internet. The network lock NWL is shown in figure 1 as a module located in the connecting means TRSC and managing both the physical and the logical interface function. In this case, the processor CTC executes program code of the network lock NWL, thus managing the logical function of the network lock NWL, for instance handling of protocol layers. The logical function, however, may also be performed partly or entirely by the service computer module SCM or may be performed by a separate program module executed by the control means CPUSC and closely interacting with the service computer module SCM.

In the present case the user wants to control the message box service by voice commands. Therefore, a respective request is communicated from the terminal TERA to the service container CONT1 via the connection CA. As neither the service machine SM1 nor the service components CP1, CP2 are currently able to perform automatic speech recognition, the service machine SM1 transmits a respective request to the service server SSV, e.g., by means of a container. Consequently, the service server SSV communicates to the service computer SSC the service container CONT2 containing a service component CP3 that is a program module or function able to perform automatic speech recognition. The service machine SM1 and/or the service computer module SCM link the service container CONT2 to the service container CONT1. Finally, the service machine SM1 executes the service component CP3 that records the user's A voice commands and translates them into commands understandable by the service machine SM1 and/or the service component CP1.

In another scenario, some basic service functions are performed by the service computer SSC, for example the automatic speech recognition mentioned. In the present case, the automatic speech recognition is performed by the service computer module SCM or by a program module able to be linked to the service computer module SCM. The service computer module SCM provides the service container CONT1 a resource lock API offering to the service container CONT1 an access to a automatic speech recognition function. In this case the resource lock API may be regarded as an application program interface. In another embodiment, the resource lock API may be an interface to an external Intelligent Peripheral (IP), which is a so-called special resource point performing, e.g., voice recognition.

For simplification, figure 1 shows only service containers CONT1 and CONT2 executed by the service computer SSC. The service computer SSC, however, executes further service containers not depicted in figure 1, for example a service container providing personal services for the terminal TERB via the connection CB. To this end, the service computer SSC is equipped to perform a significant number of transactions per second. Additionally, the service computer SSC swaps between service containers to be executed. It may happen, however, that the service computer SSC is close to be overloaded. To avoid an overload or blocking situation, the service container CONT1 informs the service server SSV of the condition of the service computer SSC via a monitor lock CDRL. The data sent via the monitor lock CDRL and the connection CCSL contains for instance information about the usage of the service computer SSC for the present service session and/or the usage of the network lock NWL. Dependent on that "call and session detailed record" data (CDR data) the service server SSV may download further service containers serving terminals TERA or TERB onto another service computer (not shown in figure 1) instead of the service computer SSC. Thus, the service server SSV controls and manages the load of the service computer SSC. CDR data may also serve to charge, e.g., the user A for using the service computer SSC and/or for using the connection CA. Furthermore, the CDR data may be used for statistic purposes or the like. CDR data may be transmitted, e.g., after and/or once or several times during execution of the service container CONT1. As described in connection with the network lock NWL the monitor lock CDRL may likewise be a separate program module executed by the processor CTC of the connecting means TRSC. The monitor lock CDRL, i.e., its logical algorithms, may however be integrated in the service computer module SCM. The function of the monitor lock CDRL may also be performed by the receiving means CONL. In this case, CDR data is transmitted in dedicated service containers from the service container CONT1 to the service server SSV via the connection CCONL.

A management lock NML provides a further interface for monitoring and controlling the service container CONT1 and/or the service computer SSC. The service container CONT1 sends alarms via the management lock NML and a connection CCN to a management system NMS, that is, e.g., an operator terminal or a network management system. The alarms notify the management system NMS for instance of a malfunction or an overload of the service computer SCC or inform of a communication fault of the service container CONT1 while communicating with the terminal TERA. In the opposite direction, the management system NMS may send a command instructing the service container CONT1, for example, to suspend its operation in an overload situation of the service computer SSC. The management system NMS may be operated by the operator of the network NET, of the service computer SSC or of the service server SSV. The extent to which alarms or commands may be transmitted via the management lock NML depends on the extent to which the service container CONT1 is to be controlled by the management system NMS. It is possible, that the management lock NML offers a transparent connection to the entire monitoring and controlling resources of the service container CONT1. Furthermore, the management system NMS may be or may comprise a so-called thin client being controlled and remotely operated by the service container CONT1. As known from the network lock NWL and the monitor lock CDRL the logical function of the management lock NML may be, for example, performed by the service computer module SCM and/or by a program module locally executed by the connecting means TRSC.

The service containers delivered by the service server SSV may be pre-configured and stored in the memory means MEMSV. The service server module SSM determines the relevant service container(s) according to a request sent by the respective user and provides the service container for the service computer SSC.

The memory means MEMSV may also contain user profiles, the user profiles containing services subscribed by users, interests of users and information related to their interests.

The user profiles and/or at least some kind of service containers may be stored in global database DB, operated and maintained by the home operator of the respective users, in the present case by the home operator of users A and B. The service server SSV requests user data or service containers via a connection CDB from the database DB, which may be single server or a database cluster serving the service server SSV as well as further service servers not illustrated.

The service server module SSM, however, may contain a packaging platform (not shown) being adapted provide service containers. The packaging platform packages service components relevant to provide a required service into service containers. Such service components may be, for example, service logics provided by a service creation environment SCE via the connection CSCE. The service logics are application programs or application functions to be executed or interpreted by a service machine of a service container. The service logics may be designed according to the definitions of an intelligent network or may consist of proprietary program code. Furthermore, the packaging platform adapts the service container to fit to the locks offered by the respective service computer, for example, the network lock NWL of the service computer SSC.

Due to the encapsulation in service containers various further types of service components intended to be executed or applied by a service machine are possible such as, for example:
- user information to be transmitted by the respective service machine, e.g., to a terminal, the terminal displaying the user information,
- application programs, e.g., Java applets, to be executed by a terminal or by a service computer, and
- sound or video files to be reproduced by a terminal or a service computer. Furthermore, the service server SSV may transmit to the service computer SSC a "transport" service container containing and wrapping a service container intended to be executed in a second level service computer (not shown) or in the terminals A or B. By way of example, the service container CONT2 may be such a "transport" service container and the service component CP3 a service container packed therein. The service machine SM1 forwards the service component /service container CP3 to the terminal TERB or to another service computer (not shown) via the network lock NWL. The terminal TERB or, respectively, the service computer not shown execute the service component CP3 being itself a service container. To this end, a program module PMPB is installed in the terminal TERB being of similar design and performance as the service computer module SCM.

In another embodiment the service container CONT1 performs the function of a computer telephony integration (CTI) server, whereas the terminal TERA is a telephone set and the terminal TERB is a personal computer being presently in the domain of user A and cooperating with the terminal TERA. To this end, the service container CONT1 communicates signaling data, e.g., ISDN D-channel data, to the terminal A via the connection CA. On the connection CB, however, the service container CONT1 communicates with the terminal TERB using a CTI protocol, e.g., based on the CSTA protocol 179/180 (Computer Supported Telephony Applications) as defined by the European Computer Manufactures Association (ECMA).

In a further embodiment, the service container CONT1 performs the function of a so-called soft switch. For example, the service container CONT1 may link the terminals TERA and TERB in a manner of a private automatic branch exchange (PABX) located in the network NET. In this case, the service container CONT1 communicates signaling data providing custom services, such as indication of a callers name or of busy terminals, on the connections CA and CB, whereas the terminals TERA and TERB communicate via a call connection COM established on the network NET, e.g., supported by the service container CONT1.

In another scenario the service container CONT1 performs a so-called soft-terminal function. If, e.g., the terminal TERB is a voice terminal not able to receive a videophone call, the service container CONT1 may terminate the videophone call's video channel and the terminal TERB, on the other hand, may terminate the videophone call's voice channel.

Furthermore, the service container CONT1 may serve as a so-called soft special resource point (soft SRP) performing, e.g., voice recognition. This SRP may be used by only one service container, specially assigned to it or, in another embodiment, as a global SRP to be addressed by various service containers running on the service computer SSC or external service computers not shown.

It may happen, that a service container runs only once and is reloaded into the service computer SSC if the respective service container's service is required again. The service computer SSC, however, may store a service container for a longer period if the respective service container is used frequently. To this end, the service computer SSC and/or the service server SSV may check the usage of the service container. A service container that has not been used for a predefined period may be removed from the memory means MEMSC. Both methods of service container management, "load once and run many times" or "load once and run once" may be performed in parallel and may depend on the respective service container's content.

In further scenario, steps S21 to S25 are performed as follows: the network NET works like an intelligent network (IN) and the terminal TERA is a telephone set. The network NET contains several service switching points (SSPs, not shown) and at least one service switching point (SCP, not shown), the SSPs and SCP being built and working at least partly according to the specifications of the ITU as described in the preamble of the present description. The user A dials a predefined telephone number by means of a keyboard of terminal A. The terminal A sends a call request containing the predefined telephone number to the network NET. A service switching point (SSP, not shown) determines by checking the predefined telephone number that the call request concerns not a call connection but a service. Thus, the service switching point forwards the call request to a service control point (SCP, not shown). The SCP checks whether the service computer SSC is able to perform the requested service and, if this is not the case, requests the service server SSV to download the service container CONT1 to the service computer SSC. In this context it is clear, that the functions of the service computer SSC may be integrated into the SSP or the SCP mentioned or into a combination thereof, a so-called service switching and control point (SSCP). In other words, the service computer SSC is equipped with means to perform service switching and/or service control functions as described in the preamble of the present description.

Although the foregoing invention has been described in some detail for purposes of clarity of understanding, it will be apparent that certain changes and modifications may be practiced within the scope of the invention. For instance, the communication mechanism used between the service computer SSC and the service server SSV may be any suitable object request broker or may also be proprietarily designed. Furthermore, the implementation is neither limited to Java nor to object-oriented programming languages in general, for example C++ or the like. Instead of the object request broker communication mechanism used between the service computer SSC and the service server SSV any suitable communication mechanism may be applied.

## Claims

1. A method for providing personal services for a communication means (TERA, TERB) of a user, said communication means (TERA, TERB) being connected to a communication network (NET), the method comprising the steps of:
- transmission by a service server (SSV) of a message to a service computer (SSC),
- execution by said service computer (SSC) of a personal service for said communication means (TERA, TERB),
- **characterized in that** the message is a service container comprising a service machine and service components, the service components being program modules or program functions, where the service machine (SM1) is executed by said service computer (SSC),
- said service computer (SSC) provides at least one network lock (NWL) for said service container (CONT1), said at least one network lock (NWL) offering to said service container (CONT1) a predefined interface to said communication network (NET) for the provision of said personal service, and
- said personal service is provided by said service machine (SM1) by executing or by applying at least one service component (CP1, CP2) that has been transmitted to said service computer (SSC) via said service container (CONT1).

2. The method as claimed in claim 1, **characterized by** provision by the service computer (SSC) of at least one monitor lock (CDRL) for said service container (CONT1), via said at least one monitor lock (CDRL) said service container (CONT1) informs the service server (SSV) of a condition of the service computer (SSC).

3. The method as claimed in claim 1, **characterized by** provision by the service computer (SSC) of at least one management lock (NML) for said service container (CONT1), via said at least one management lock (NML) said service container (CONT1) sends alarms to an operator terminal or a network management system (NMS).

4. The method as claimed in claim 1, **characterized in that** said terminal (TERA, TERB) sends a request for said service to the service server (SSV).

5. The method as claimed in claim 1, **characterized in that** it is carried out in an Intelligent Network representing said communication network (NET).

6. The method as claimed in claim 1, **characterized in that** the service computer (SSC) provides the a resource lock (API) for said service container (CONT1), said resource lock (API) offering to said service container (CONT1) an application program interface and/or an interface towards a special resource point and/or an interface towards a service program interface.

7. A service computer (SSC) for providing personal services for a communication means (TERA, TERB) of a user, said communication means (TERA, TERB) being connected to a communication network (NET), **characterized in that**
- said service computer (SSC) comprises receiving means (TRSC, CONL) for receiving of a service container (CONT1) containing a service machine (SM1) from a service server (SSV),
- said service computer (SSC) comprises network lock means (NWL, TRSC) designed such that the service computer (SSC) can provide at least one network lock (NWL) for said service container (CONT1), said at least one network lock (NWL) offering to said service container (CONT1) a predefined interface to said communication network (NET) for provision of a personal service for said communication means (TERA, TERB) and
- said service computer (SSC) comprises execution means (CPUSC, SCM) designed such that the service computer (SSC) can execute said service machine (SM1), said service machine (SM1) managing the provision of said personal service for said communication means (TERA, TERB) and said service machine (SM1) executing or applying at least one service component (CP1, CP2, CP3) for provision of said personal service, said service component (CP1, CP2, CP3) being transmitted to said service computer (SSC) via said service container (CONT2).

8. A service server (SSV) for providing personal services for a communication means (TERA, TERB) of a user, said communication means (TERA, TERB) being connected to a communication network (NET),
- said service server (SSV) comprising receiving means (TRSV) for receiving a request for a personal service for said communication means (TERA, TERB),
**characterized in that**
- said service server (SSV) comprises provision means (SSM, SCE, DB) for providing at least one service container (CONT1) containing a service machine (SM1) able to manage the execution of said personal service and said service machine (SM1) further being able to execute or to apply at least one service component (CP1, CP2, CP3) for said service provision, when said service machine (SM1) is executed by a service computer (SSC), said service component (CP1, CP2, CP3) being contained in said service container (CONT1), and
- said at least one service container (CONT1) is adapted to make use of at least one network lock (NWL) provided by said service computer (SSC) and offering to said at least one service container (CONT1) a predefined interface to said communication network (NET), and
- said service server (SSV) comprises transmission means (TRSV) for transmission of said at least one service container (CONT1) to said service computer (SSC).

9. A computer software product for a service server, **characterized by** comprising programming means for performing the steps of a service server according to the method of claim 1.

10. A computer software product for providing a personal service, the computer software product comprising a service container, **characterized in that** the service container comprises a service machine and service components, the service components being program modules or program functions, where the service machine (SM1) is executable by a service computer (SSC), where the service computer (SSC) provides at least one network lock (NWL) for said service container (CONT1), said at least one network lock (NWL) offering to said service container (CONT1) a predefined interface to said communication network (NET) for the provision of said personal service, and where said personal service is provided by execution or by application of said service machine (SM1) of at least one service component (CP1, CP2) that has been transmitted to said service computer (SSC) via said service container (CONT1).

## Patentansprüche

1. Verfahren zum Bereitstellen von persönlichen Diensten für ein an ein Kommunikationsnetz (NET) angeschlossenes Kommunikationsmittel (TERA, TERB) eines Benutzers, welches Verfahren folgende Schritte umfasst:
- Übertragen einer Nachricht von einem Dienstserver (SSV) zu einem Dienstrechner (SSC),
- Ausführen eines persönlichen Dienstes für das Kommunikationsmittel (TERA, TERB) durch den Dienstrechner (SSC),
- **dadurch gekennzeichnet, dass** die Nachricht ein Dienstcontainer ist, der eine Dienstmaschine und Dienstkomponenten umfasst, wobei die Dienstkomponenten Programmmodule oder Programmfunktionen sind und wobei die Dienstmaschine (SM1) durch den Dienstrechner (SSC) ausgeführt wird,
- der Dienstrechner (SSC) mindestens eine Netzsperre (NWL) für den Dienstcontainer (CONT1) bereitstellt, wobei die mindestens eine Netzsperre (NWL) dem Dienstcontainer (CONT1) eine vordefinierte Schnittstelle zu dem Kommunikationsnetz (NET) für die Bereitstellung des persönlichen Dienstes bietet, und
- der persönliche Dienst von der Dienstmaschine (SM!) dadurch bereitgestellt wird, dass mindestens eine Dienstkomponente (CP1, CP2), die zum Dienstrechner (SSC) über den Dienstcontainer (CONT1) übertragen wurde, ausgeführt oder angewendet wird.

2. Verfahren nach Anspruch 1, **gekennzeichnet durch** die Bereitstellung mindestens einer Monitorsperre (CDRL) für den Dienstcontainer (CONT1) **durch** den Dienstrechner (SSC), über die der Dienstcontainer (CONT1) den Dienstserver (SSV) über einen Zustand des Dienstrechners (SSC) informiert.

3. Verfahren nach Anspruch 1, **gekennzeichnet durch** die Bereitstellung mindestens einer Managementsperre (NML) für den Dienstcontainer (CONT1), über die der Dienstcontainer (CONT1) Alarme an einen Bedienplatz oder ein Netzmanagement-System (NMS) sendet.

4. Verfahren nach Anspruch 1, **dadurch gekennzeichnet, dass** das Endgerät (TERA, TERB) eine Anforderung für den Dienst an den Dienstserver (SSV) sendet.

5. Verfahren nach Anspruch 1, **dadurch gekennzeichnet, dass** es in einem Intelligenten Netz durchgeführt wird, welches das Kommunikationsnetz (NET) darstellt.

6. Verfahren nach Anspruch 1, **dadurch gekennzeichnet, dass** der Dienstrechner (SSC) eine Ressourcensperre (API) für den Dienstcontainer (CONT1) bereitstellt, die dem Dienstcontainer (CONT1) eine Anwenderprogramm-Schnittstelle und/oder eine Schnittstelle zu einem speziellen Ressourcenpunkt und/oder eine Schnittstelle zu einer Dienstprogramm-Schnittstelle bietet.

7. Dienstrechner (SSC) zum Bereitstellen von persönlichen Diensten für ein an ein Kommunikationsnetz (NET) angeschlossenes Kommunikationsmittel (TERA, TERB) eines Benutzers, **dadurch gekennzeichnet, dass**
- der Dienstrechner (SSC) Empfangsmittel (TRSC, CONL) zum Empfang eines eine Dienstmaschine (SM1) enthaltenden Dienstcontainers (CONT1) umfasst,
- der Dienstrechner (SSC) Netzwerksperremittel (NWL, TRSC) umfasst, die so ausgelegt sind, dass der Dienstrechner (SSC) mindestens eine Netzsperre (NWL) für den Dienstcontainer (CONT1) bereitstellen kann, wobei die mindestens eine Netzsperre (NWL) dem Dienstcontainer (CONT1) eine vordefinierte Schnittstelle zu dem Kommunikationsnetz (NET) für die Bereitstellung eines persönlichen Dienstes für das Kommunikationsmittel (TERA, TERB) bietet, und
- der Dienstrechner Ausführungsmittel (CPUSC, SCM) umfasst, die so ausgelegt sind, dass der Dienstrechner (SSC) die Dienstmaschine (SM1) ausführen kann, wobei die Dienstmaschine (SM1) die Bereitstellung der persönlichen Dienste für das Kommunikationsmittel (TERA, TERB) regelt und mindestens eine Dienstkomponente (CP1, CP2, CP3) für die Bereitstellung des persönlichen Dienstes ausführt oder anwendet, wobei die Dienstkomponente (CP1, CP2, CP3) zum Dienstrechner (SSC) über den Dienstcontainer (CONT1) übertragen wird.

8. Dienstserver (SSV) zum Bereitstellen von persönlichen Diensten für ein an ein Kommunikationsnetz angeschlossenes Kommunikationsmittel (TERA, TERB) eines Benutzers,
- wobei der Dienstserver (SSV) Empfangsmittel (TRSV) zum Empfang einer Anforderung für einen persönlichen Dienst für das Kommunikationsmittel (TERA, TERB) umfasst,
**dadurch gekennzeichnet, dass**
- der Dienstserver (SSV) Bereitstellungsmittel (SSM, SCE, DB) zur Bereitstellung mindestens eines Dienstcontainers (CONT1) umfasst, welcher eine Dienstmaschine (SM1) enthält, die fähig ist, die Ausführung des persönlichen Dienstes zu regeln, und weiterhin fähig ist, mindestens eine Dienstkomponente (CP1, CP2, CP3) für die Dienstbereitstellung auszuführen oder anzuwenden, wenn die Dienstmaschine (SM1) von einem Dienstrechner (SSC) ausgeführt wird, wobei die Dienstkomponente (CP1, CP2, CP3) in dem Dienstcontainer (CONT1) enthalten ist,
- der mindestens eine Dienstcontainer (CONT1) geeignet ist, mindestens eine Netzsperre (NWL) zu benutzen, die durch den Dienstrechner (SSC) bereitgestellt wird und dem mindestens einen Dienstcontainer (CONT1) eine vordefinierte Schnittstelle zu dem Kommunikationsnetz (NET) bietet, und
- der Dienstserver (SSV) Übertragungsmittel (TRSV) zur Übertragung des mindestens einen Dienstcontainers (CONT1) zum Dienstrechner (SSC) umfasst.

9. Computersoftware-Produkt für einen Dienstserver, **dadurch gekennzeichnet, dass** es Programmiermittel zur Durchführung der Schritte eines Dienstservers gemäß dem Verfahren nach Anspruch 1 umfasst.

10. Computersoftware-Produkt zum Bereitstellen eines persönlichen Dienstes, das einen Dienstcontainer umfasst, **dadurch gekennzeichnet, dass** der Dienstcontainer eine Dienstmaschine und Dienstkomponenten umfasst, wobei die Dienstkomponenten Programmmodule oder Programmfunktionen sind, wobei die Dienstmaschine (SM1) durch einen Dienstrechner (SSC) ausführbar ist, der mindestens eine Netzsperre (NWL) für den Dienstcontainer (CONT1) bereitstellt, welche dem Dienstcontainer (CONT1) eine vordefinierte Schnittstelle zu dem Kommunikationsnetz (NET) für die Bereitstellung des persönlichen Dienstes bietet, und wobei der persönliche Dienst durch Ausführung oder Anwendung der Dienstmaschine (SM1) mindestens einer Dienstkomponente (CP1, CP2) bereitgestellt wird, die zum Dienstrechner (SSC) über den Dienstcontainer (CONT1) übertragen wurde.

## Revendications

1. Procédé de fourniture de services personnels à un moyen de communication (TERA, TERB) d'un utilisateur, ledit moyen de communication (TERA, TERB) étant connecté à un réseau de communication (NET), le procédé comprenant les étapes suivantes :
transmission par un serveur de service (SSV) d'un message à un ordinateur de service (SSC),
exécution par ledit ordinateur de service (SSC) d'un service personnel pour ledit moyen de communication (TERA, TERB),
**caractérisé en ce que** le message est un contenant de service comprenant une machine de service et des composants de service, les composants de service étant des modules ou des fonctions programmées, où la machine de service (SM1) est exécutée par ledit ordinateur de service (SSC),
ledit ordinateur de service (SSC) fournit au moins un verrou de réseau (NWL) audit contenant de service (CONT1), ledit au moins un verrou de réseau (NWL) offrant audit contenant de service (CONT1) une interface prédéfinie avec ledit réseau de communication (NET) pour la fourniture dudit service personnel, et
ledit service personnel est fourni par ladite machine de service (SM1) en exécutant ou en appliquant au moins un composant de service (CP1, CP2) qui a été transmis audit ordinateur de service (SSC) via ledit contenant de service (CONT1).

2. Procédé selon la revendication 1, **caractérisé par** la fourniture par l'ordinateur de service (SSC) d'au moins un verrou de surveillance (CDRL) audit contenant de service (CONT1), via ledit au moins un verrou de surveillance (CDRL), ledit contenant de service (CONT1) informe le serveur de service (SSV) d'une condition de l'ordinateur de service (SSC).

3. Procédé selon la revendication 1, **caractérisé par** la fourniture par l'ordinateur de service (SSC) d'au moins un verrou de gestion (NML) audit contenant de service (CONT1), via ledit au moins un verrou de gestion (NML), ledit contenant de service (CONT1) envoie une alarme à un terminal opérateur ou à un système de gestion de réseau (NMS).

4. Procédé selon la revendication 1, **caractérisé en ce que** ledit terminal (TERA, TERB) envoie une requête pour ledit service au serveur de service (SSV).

5. Procédé selon la revendication 1, **caractérisé en ce qu'**il est réalisé dans un réseau intelligent représentant ledit réseau de communication (NET).

6. Procédé selon la revendication 1, **caractérisé en ce que** l'ordinateur de service (SSC) fournit un verrou de ressource (API) audit contenant de service (CONT1), ledit verrou de ressource (API) offrant audit contenant de service (CONT1) une interface de programmation et/ou une interface vers un point de ressource spécial et/ou une interface vers une interface de programme utilitaire.

7. Ordinateur de service (SSC) destiné à fournir des services personnels à un moyen de communication (TERA, TERB) d'un utilisateur, ledit moyen de communication (TERA, TERB) étant connecté à un réseau de communication (NET), **caractérisé en ce que**
ledit ordinateur de service (SSC) comprend des moyens de réception (TRSC, CONL) destinés à recevoir un contenant de service (CONT1) contenant une machine de service (SM1) depuis un serveur de service (SSV),
ledit ordinateur de service (SSC) comprend un moyen de verrouillage de réseau (NWL, TRSC) conçu de façon que l'ordinateur de service (SSC) puisse fournir au moins un verrou de réseau (NWL) audit contenant de service (CONT1), ledit au moins un verrou de réseau (NWL) offrant audit contenant de service (CONT1) une interface prédéfinie avec ledit réseau de communication (NET) pour la fourniture d'un service personnel audit moyen de communication (TERA, TERB), et
ledit ordinateur de service (SSC) comprend un moyen d'exécution (CPUSC, SCM) conçu de façon que l'ordinateur de service (SSC) puisse exécuter ladite machine de service (SM1), ladite machine de service (SM1) gérant la fourniture dudit service personnel audit moyen de communication (TERA, TERB) et ladite machine de service (SM1) exécutant ou appliquant au moins un composant de service (CP1, CP2, CP3) pour la fourniture dudit service personnel, ledit composant de service (CP1, CP2, CP3) étant transmis audit ordinateur de service (SSC) via ledit contenant de service (CONT1).

8. Serveur de service (SSV) destiné à fournir des services personnels à un moyen de communication (TERA, TERB) d'un utilisateur, ledit moyen de communication (TERA, TERB) étant connecté à un réseau de communication (NET),
ledit serveur de service (SSV) comprenant des moyens de réception (TRSV) destinés à recevoir une requête pour un service personnel pour ledit moyen de communication (TERA, TERB), **caractérisé en ce que**
ledit serveur de service (SSV) comprend des moyens de fourniture (SSM, SCE, DB) destinés à fournir au moins un contenant de service (CONT1), contenant une machine de service (SM1) capable de gérer l'exécution dudit service personnel et ladite machine de service (SM1) étant en outre capable d'exécuter ou d'appliquer au moins un composant de service (CP1, CP2, CP3) pour la fourniture dudit service, lorsque ladite machine de service (SM1) est exécutée par un ordinateur de service (SSC), ledit composant de service (CP1, CP2, CP3) étant contenu dans ledit contenant de service (CONT1), et
ledit au moins un contenant de service (CONT1) est adapté pour utiliser au moins un verrou de réseau (NWL) fourni par ledit ordinateur de service (SSC) et offrant audit au moins un contenant de service (CONT1) une interface prédéfinie avec ledit réseau de communication (NET), et
ledit serveur de service (SSV) comprend des moyens de transmission (TRSV) pour la transmission dudit au moins un contenant de service (CONT1) audit ordinateur de service (SSC).

9. Produit logiciel informatique pour un serveur de service, **caractérisé en ce qu'**il comprend des moyens de programmation destinés à exécuter les étapes d'un serveur de service selon le procédé de la revendication 1.

10. Produit logiciel informatique destiné à fournir un service personnel, le produit logiciel informatique comprenant un contenant de service, **caractérisé en ce que** le contenant de service comprend une machine de service et des composants de service, les composants de service étant des modules ou des fonctions programmées, où la machine de service (SM1) peut être exécutée par un ordinateur de service (SSC), où l'ordinateur de service (SSC) fournit au moins un verrou de réseau (NWL) audit contenant de service (CONT1), ledit au moins un verrou de réseau (NWL) offrant audit contenant de service (CONT1) une interface prédéfinie avec ledit réseau de communication (NET) pour la fourniture dudit service personnel, et où ledit service personnel est fourni par l'exécution ou par l'application par ladite machine de service (SM1) d'au moins un composant de service (CP1, CP2) qui a été transmis audit ordinateur de service (SSC) via ledit contenant de service (CONT1).
